# EUROPEAN PATENT APPLICATION

(11) **EP 4 464 400 A1**
(43) Date of publication of application: **20.11.2024**
(21) Application number: 23020232.7
(22) Date of filing: 17.05.2023
(51) Int. Cl.: B01D 53/22, C10L 3/10

(54) **METHOD AND A PROCESS PLANT FOR SELECTIVE GAS SEPARATION FROM A GAS MIXTURE**

(71) Applicant: Linde GmbH, 82049 Pullach (DE)
(72) Inventor: Bohn, Jan-Peter, 82049 Pullach (DE); Schiffmann, Patrick, 82049 Pullach (DE); Kim, Yoon Jeoung, 82049 Pullach (DE); Steiner, Christine, 82049 Pullach (DE)
(74) Representative: Lu, Jing

(57) **Abstract**

The invention relates to a method for selective gas separation from a gas mixture (GM) using a membrane stage (1), wherein the membrane stage (1) is fed with a first feed mixture (F1), and in the membrane stage (1) a first permeate (P1) and a first retentate (R1) are formed. The first permeate (P1) formed by the membrane stage (1) is, at least partially, guided to upstream of the membrane stage (1) and the first feed mixture (F1) is further at least partially formed by the first permeate (P1), or part thereof.

## Description

The invention relates to a method and a process plant for selective gas separation from a gas mixture.

### Background

A membrane is a partially transmissive element, which has a selective semipermeable barrier between two phases: feed and permeate. Components with high permeance can pass the barrier faster and gather on the permeate side, whereas components with low permeance mostly remain on the feed side of the membrane.

A membrane can be fabricated from various materials, such as polymers and ceramics. Its material, structure, and homogeneity characterize the properties of membrane, i.e. its permeabilities, selectivities, physical and chemical stability.

Membranes are conventionally arranged in closed units and vary in their form, packing density, and flow configuration.

The driving force of the membrane is the partial pressure difference between the feed and the permeate side of the membrane. However, temperature and operating pressure also affects the performance of the membrane.

The selective gas separation from gas mixtures, e.g. from natural gas, which are gas mixtures of hydrocarbons and other components, hereinafter referred to as "non-hydrocarbons", which partly have a higher economic and technical value than natural gas as a mixture, is one application of such membranes. Hydrocarbons include mainly methane, but also higher alkanes such as ethane, propane, butane and pentane. Non-hydrocarbons include in particular acid gases such as carbon dioxide and sulphur compounds, as well as oxygen, hydrogen, nitrogen, helium, neon, krypton and xenon.

Membrane units are usually optimally designed for a specified feed gas flow, composition and feed gas temperature. In turn-down operation, or temporarily process up-sets, the valuable components (e.g. in natural gas sweetening mainly hydrocarbons) are lost at a higher percentage to the permeate off gas. To mitigate these losses, various turn-down operations are possible with different advantages/disadvantages.

The feed temperature(s) to the membrane stage(s) can be adjusted. At lower temperatures, membranes have lower capacity but a higher selectivity. But in most applications, the available optimal temperature range (e.g. 40 - 60 °C) only allows a capacity range of around 90 % to 110 % of the reference capacity at 50 °C. Other temperature restrictions as stability of the membrane or dew point requirements in the retentate and permeate can also limit the applicable temperature range.

The feed pressure is often given/fixed by upstream or downstream unit operations and can in most cases not or only to a very small extent be used for turn down adjustment.

Varying the permeate pressure is another possibility, to adjust the membrane capacity as pressure difference across the membrane and capacity have an approximately linear relationship. But at lower pressure ratios, the selectivity of the membrane decreases considerably, which will have a strong negative impact on the losses of valuable products to the permeate.

Adjusting the membrane area according to the turn down ratio is, from a mass transfer aspect, the most efficient possibility to operate a membrane plant in turndown. The main disadvantage is that this requires a lot of instrumentation, control valves and an elaborated process control system and operators always present and prepared to stabilize plant operation. Membranes are generally very prone to pressure surges or to fast pressurization or depressurization. Especially if the turn-down needs to be achieved once or even multiple times per day.

Therefore, there is a need to increase robustness of gas separation facilities and lower their cost (capex and opex), especially with regard to the aforementioned limitations.

### Disclosure of the Invention

With this in mind, the present invention proposes a method for selective gas separation from a gas mixture and a corresponding process plant configured for carrying out the method according to the features of the independent claims. Preferred embodiments are the subject of the dependent claims as well as the following description.

Before explaining the advantages of the present invention, some terms used in describing the invention are defined in more detail below.

In the context of the present application, a "permeate" is understood to be a gas mixture which predominantly or exclusively comprises components of a gas mixture (separation feed) supplied to the membrane separation step which are not or rather not retained by a membrane used in a membrane separation step, i.e. which pass the membrane more easily than others. In this way, the permeate is enriched in the component(s) that is (are) not or rather not retained by the membrane. A corresponding membrane is, for example, a commercial polymer membrane, which can be used on a large scale for the separation of corresponding components. A permeate can be taken from a membrane separation unit used in the membrane separation step on the other side of the membrane than the one on which the gas mixture is fed to the membrane separation unit.

Accordingly, a "retentate" is a gas mixture that predominantly contains components that are completely or at least predominantly retained by the membrane used in the membrane separation step. In particular, the retentate considered in the context of the present invention is depleted in e.g. carbon dioxide and enriched in hydrocarbons. The retentate can be removed from a membrane separation unit used in the membrane separation step on the same side of the membrane on which the gas mixture is fed to the membrane separation unit.

Component mixtures, as used herein, may be rich or poor in one or more components, where the term "rich" may refer to a content of at least 75%, 80%, 90%, 95%, or 99%, and the term "poor" may refer to a content of at most 25%, 20%, 10%, 5%, or 1%, on a molar, weight, or volume basis. Component mixtures, as used herein, may further be enriched, or depleted in one or more components, wherein these terms refer to a corresponding content in another component mixture using which the component mixture under consideration was formed. The component mixture under consideration is "enriched" if it has at least 1.1 times, 2 times, 5 times, 10 times, 100 times or 1,000 times the content of the designated component(s), and "depleted" if it has at most 0.9 times, 0.5 times, 0.1 times, 0.01 times or 0.001 times the content of the designated component(s). A component mixture "predominantly" containing one or more components is in particular rich in this or these components in the sense just explained.

Where reference is made herein to "forming" a component mixture using another component mixture, let it be understood that the component mixture under consideration has at least some of the components contained in or formed by the other component mixture. Forming one component mixture from another may include, for example, branching off a portion of the component mixture, feeding one or more additional components or component mixtures, chemically or physically reacting at least some components, and heating, cooling, evaporating, condensing, etc.

The present invention proposes a method for selective gas separation from a gas mixture, wherein the gas mixture is in particular a natural gas, by using a first membrane stage. The first membrane stage is fed with a first feed mixture and in the membrane stage a first permeate and a first retentate are formed. In particular, the first membrane stage is configured to enrich the concentration of carbon dioxide in the first permeate and the concentration of hydrocarbons in the first retentate formed by the first membrane stage with regard to the concentration in the gas mixture.

The first feed mixture is formed at least partially from the gas mixture containing both a valuable and a non-valuable component in different concentrations, or a part thereof.

The first permeate formed by the first membrane stage is, at least partially, compressed by a compressor and guided to upstream of the first membrane stage and the first feed mixture is further at least partially formed by the first permeate, or part thereof.

In this context, it should be noted that when we speak here of "a" first membrane stage in the singular, it is of course not excluded that other first membrane stages can be connected in series after the first membrane stage and can also be operated accordingly, i.e. recycle part of its permeate to their own feed mixture. In this case, permeate of the first membrane stage is used as the feed mixture for the membrane stage arranged downstream thereof.

By recycling part of the permeate of the membrane stage to the feed of the membrane stage, the recovery of valuable feed components during deep part-load or upset conditions can be increased. In this way, the costs for additional instrumentation and control valves are considerably reduced, risk of membrane damages are eliminated, and the membrane stage can be operated longer at its optimal process conditions. Furthermore, the operating range with regards to load and composition of the membrane unit is enlarged.

For example, in a process plant in which carbon dioxide and hydrocarbons are to be separated from a gas mixture such as natural gas, the amount of hydrocarbons in the permeate of a membrane stage is dependent on the concentration of carbon dioxide in the feed mixture. The lower the concentration of carbon dioxide, the higher the amount of hydrocarbons in the permeate of a membrane stage. These hydrocarbons would subsequently be lost. Thus, by refeeding at least part of the first permeate to the first feed mixture, the concentration of carbon dioxide in the first feed mixture can be increased and thereby, the loss of hydrocarbons can be reduced.

According to an embodiment, a second membrane stage is arranged upstream of the first membrane stage, wherein the second membrane stage is fed with the gas mixture and forms a second permeate and a second retentate. The second permeate of the second membrane stage is guided to the first membrane stage to, at least partially, form the first feed mixture.

By arranging the second membrane stage upstream of the first membrane stage, a large part of the valuable hydrocarbons is removed from the feed to the first membrane stage, which reduces the concentration of the desired component, i.e. hydrocarbons, in the first feed mixture and increases the concentration of non-desirable components, i.e. carbon dioxide, in the first feed mixture. In particular, the second membrane stage can be a larger membrane stage that is used to decrease the concentration of the desired component in the second permeate P2 to a level at which the first membrane stage can work optimally.

According to an embodiment, the first feed mixture is compressed by a compressor before being fed to the membrane stage and is controlled by a compressor controller. In particular, the compressor controller controls the compressor based on the flow, composition and/or pressure of the second permeate.

By using the compressor, the pressure of the first feed mixture to the first membrane stage, such that the first membrane stage is operated at a higher inlet pressure than by only providing the first membrane stage with the gas mixture or the permeate of the second membrane stage. Thereby, the permeate pressure of the first membrane stage is higher than the permeate of the second membrane stage and hence, part of the permeate from the first membrane stage can easily be recycled to the input of the first membrane stage being formed with the permeate of the second membrane stage and being compressed by a compressor, further improving the recovery of valuable feed components during deep part-load or upset conditions.

In another embodiment, the pressure of the first and/or second permeate is controlled by a first pressure controller and a first control valve and/or a second pressure controller and a second control valve.

By controlling the pressure of the first and/or second permeate, the partial pressure difference in the first and/or second membrane stage can be adjusted, whereby the efficiency of the first and/or second membrane stage can be improved, as the membrane stages can be operated at their optimal working point.

In an embodiment, the second feed mixture is further formed at least partially by the first retentate, or part thereof. In particular, a flow or pressure of the first retentate is controlled by a retentate controller, which can, in particular, be a flow or pressure controller, and a retentate control valve.

By additionally recycling the first retentate that is enriched in the valuable component, such as hydrocarbons, upstream to the second feed mixture of the second membrane stage, the recovery of valuable feed components during deep part-load or upset conditions can be increased even further.

In an embodiment, an amount of the first permeate guided to upstream of the first membrane stage is controlled by a first recycle controller and a first recycle control valve. In particular, the first recycle controller is a flow control, composition controller or pressure controller.

By controlling the amount of first permeate being recycled to upstream of the first membrane stage, the operation conditions of the first membrane stage can be adjusted such that the first membrane stage operates at its optimal working point. Further, the control can be flexibly adapted to be based on the flow, composition or pressure of the first permeate, greatly increasing the applicability of the method and process plant implementing the method.

The proposed process plant for selective gas separation from a gas mixture comprises a membrane stage and is configured to perform the method according any of the presented embodiments. For further features and advantages of such a plant and embodiments thereof, reference is therefore expressly made to the above explanations concerning the process proposed in accordance with the present invention and the embodiments, since these apply equally thereto.

### Short description of the Figures

Figure 1 shows a process plant configured to perform an embodiment according to the invention; and
Figure 2 shows a process plant configured to perform another embodiment according to the invention.

### Embodiments of the invention

The embodiments described below are described for the purpose of assisting the reader in understanding the claimed and previously explained features. They are merely representative examples and are not intended to be considered exhaustive and/or limiting with respect to the features of the invention. It is understood that the advantages, embodiments, examples, functions, features, structures and/or other aspects described previously and hereinafter are not to be considered limitations of the scope of the invention as defined in the claims or limitations of equivalents to the claims, and that other embodiments may be used and modifications made without departing from the scope of the claimed invention.

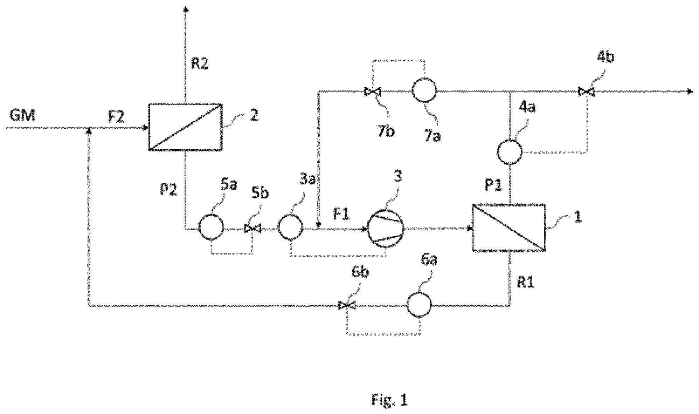

Figure 1 shows a process plant configured to perform an embodiment according to the invention. The process plant comprises a first membrane stage 1 and a second membrane stage 2. It is pointed out that, while all Figures show the use of a second membrane stage 2, the second membrane stage is not essential to the operation of the process plant and the process plant could be operated with only one or more first membrane stages 1. The gas mixture GM, which is fed to the plant, is, in particular, a natural gas containing hydrocarbons, such as methane, but also higher alkanes such as ethane, propane, butane and pentane, and non-hydrocarbons, e.g. acid gases such as carbon dioxide and sulphur compounds, as well as hydrogen, nitrogen, helium and neon, some of which are of high economic and/or technical value by themselves rather than in the gas mixture. The second feed mixture F2 fed to the second membrane stage 2 is further formed at least partially from the first retentate R1, or part thereof, formed by the membrane stage 1, wherein a flow or pressure of the first retentate R1 is controlled by a retentate controller 6a and a retentate control valve 6b.

The first membrane stage 1 and the second membrane stage 2 are, in particular, configured such that a valuable component, e.g. a certain hydrocarbon, is enriched in the first and second retentate R1, R2 and depleted in the first and second permeate P1, P2, which are formed by the membrane stages 1, 2 compared to the concentration of the components in the respective feed mixtures F1, F2 input into the membrane stage 1, 2.

The pressure of the second permeate P2 formed by the second membrane stage 2 is controlled by a first pressure controller 5a and a first control valve 5b. Thereby, the partial pressure in the second membrane stage 2 can be controlled such that the second membrane stage 2 works at its optimal working point. Then, the second permeate P2 is mixed with at least part of the first permeate P1 formed by the membrane stage 1 to form the first feed mixture F1. In the process, the pressure and/or flow of the first permeate P1 to upstream of the membrane stage 1 controlled by a recycle controller 7a and a recycle control valve 7b, wherein the recycle controller 7a can be, in particular, a composition controller, pressure controller or a flow controller, i.e. the flow and/or pressure of the first permeate P1 to upstream of the first membrane stage 1 are controlled based on the composition, pressure or flow of the first permeate P1 coming from the first membrane stage 1. The first feed mixture F1 can further be compressed by a compressor 3 controlled by a compressor controller 3a.

By recycling part of the first permeate P1 formed by the first membrane stage 1 to the feed mixture F1 of the first membrane stage 1, the recovery of valuable feed components during deep part-load or upset conditions can be increased. In this way, the costs for additional instrumentation and control valves are considerably reduced, risk of membrane damages are eliminated, and the membrane stage can be operated most of the time at its optimal process conditions. Furthermore, the operating range with regards to load and composition of the membrane unit is enlarged. In particular by using a compressor 3, the partial pressure difference in the first membrane stage 1 can be increased and the enrichment of the recovery of valuable components, i.e. hydrocarbons, in the first retentate R1 can be improved.

The pressure of the first permeate P1 not guided to upstream of the first membrane stage 1 is further controlled by a second pressure controller 4a and a second pressure control valve 4b. In particular, the partial pressure difference in the first membrane stage1 can be controlled thereby such that the first membrane stage 1 can operate at its optimal working point, increasing the efficiency of the gas separation.

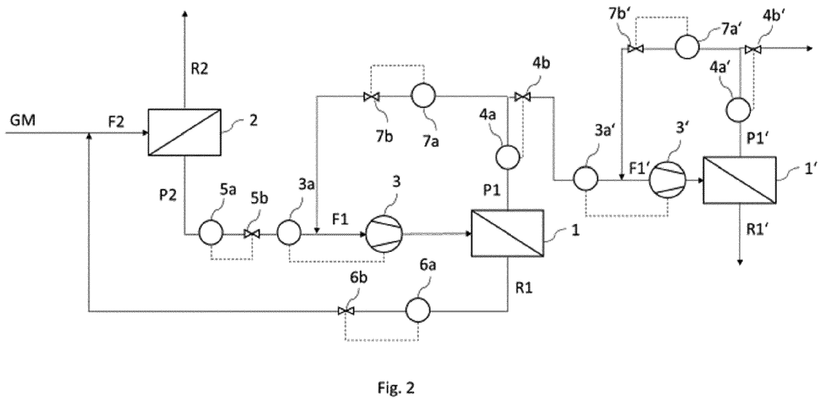

Figure 2 shows a process plant configured to perform another embodiment according to the invention. Same reference signs relate to the same devices and for details, reference is made to the above description.

The plant shown in Figure 2 additionally comprises a second setup of the first membrane stage 1, i.e. another first membrane stage 1' with another compressor 3' and compressor controller 3a', an additional second pressure controller 5a' and second pressure control valve 5b', as well as an additional recycle controller 7a' and recycle control valve 7b'.

In this case, the second pressure controller 5a and the second pressure control valve 5b of the membrane stage 1 act as the pressure control for the inlet of the additional membrane stage 1'.

The second setup is connected in series to the first setup of the first membrane stage 1 and functions in the same way. Thereby, the recovery of valuable components can be increased even further.

Even though only a setup with two first membrane stages 1, 1' and the corresponding elements is shown, it is possible to upscale this setup to comprise three, four or more, i.e. multiple, of these setups connected in series, depending on the situation and application of the process plant.

## Claims

1. Method for selective gas separation from a gas mixture (GM) using a first membrane stage (1),
wherein the first membrane stage (1) is fed with a first feed mixture (F1), wherein in first membrane stage (1) a first permeate (P1) and a first retentate (R1) are formed,
wherein the first permeate (P1) formed by the first membrane stage (1) is, at least partially, guided to upstream of the first membrane stage (1) and the first feed mixture (F1) is further at least partially formed by the first permeate (P1), or part thereof.

2. Method according to claim 1, wherein a second membrane stage (2) is arranged upstream of the at least first membrane stage (1),
wherein the second membrane stage (2) is fed with a gas mixture (GM), wherein in the second membrane stage (2) a second permeate (P2) and a second retentate (R2) are formed,
wherein the second permeate (P2) of the second membrane stage is guided to the first membrane stage (1) to, at least partially, form the first feed mixture (F1).

3. Method according to claim 2, wherein the gas mixture (GM) is natural gas.

4. Method according to any of the preceding claims, wherein the first and second membrane stage (1, 2) are configured to enrich hydrocarbons in the retentate (R1, R2) formed by each of the first and second membrane stage (1, 2).

5. Method according to any of the preceding claims, wherein the first feed mixture (F1) is compressed by a compressor (3) before being fed to the first membrane stage (1) and the compressor (3) is controlled by a compressor controller (3a), wherein the compressor controller (3a) controls the compressor (3) based on the flow, composition and/or pressure of the second permeate (P2).

6. Method according to any of the preceding claims, wherein the pressure of the first permeate (P1) is controlled by a first pressure controller (4a) and a first control valve (4b).

7. Method according to any of the preceding claims, wherein the pressure of the second permeate (P2) is controlled by a second pressure controller (5a) and a second control valve (5b).

8. Method according to any of the preceding claims, wherein the second feed mixture (F2) is further formed, at least partially, by the first retentate (R1), or part thereof.

9. Method according to the preceding claim, wherein a flow or pressure of the first retentate (R1) is controlled by a retentate controller (6a) and a retentate control valve (6b).

10. Method according to the preceding claim, wherein the retentate controller (6a) is a flow controller or a pressure controller.

11. Method according to any of the preceding claims, wherein an amount of the first permeate (P1) guided to upstream of the first membrane stage (1) is controlled by a recycle controller (7a) and a recycle control valve (7b).

12. Method according to the preceding claim, wherein the recycle controller (7a) is a flow controller, composition controller or pressure controller.

13. Process plant for selective gas separation from a gas mixture (GM) comprising at least one first membrane stage (1) and configured to perform the method according to any of the preceding claims.
